(19) Europäisches Patentamt
European Patent Office
Office européen des brevets

(11) **EP 1 440 750 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(51) Int Cl.:
***B22D 46/00*** *(2006.01)* ***B22D 25/00*** *(2006.01)*

(21) Anmeldenummer: **04000469.9**

(22) Anmeldetag: **13.01.2004**

(54) **Vorrichtung und Verfahren zur Steuerung eines Schmelz- und Giessvorgangs**

Apparatus for controlling a melting and casting process

Dispositif pour régler un procédé de coulée et de fusion

(84) Benannte Vertragsstaaten:
**AT BE BG CH CY CZ DE DK EE ES FI FR GB GR HU IE IT LI LU MC NL PT RO SE SI SK TR**

(30) Priorität: **27.01.2003 DE 10303124**

(43) Veröffentlichungstag der Anmeldung:
**28.07.2004 Patentblatt 2004/31**

(73) Patentinhaber: **BEGO Bremer Goldschlägerei Wilh. Herbst GmbH & Co.**
**KG**
**28359 Bremen (DE)**

(72) Erfinder: **Lambrecht, Heinz**
**28201 Bremen (DE)**

(74) Vertreter: **Eisenführ, Speiser & Partner**
**Patentanwälte Rechtsanwälte**
**Postfach 10 60 78**
**28060 Bremen (DE)**

(56) Entgegenhaltungen:
**DE-A- 3 345 542          FR-A- 2 776 382**
**US-A- 3 788 382          US-A- 4 647 222**
**US-A- 4 796 688          US-A1- 2001 050 942**

## Beschreibung

Die Erfindung betrifft eine Vorrichtung zur Durchführung eines Schmelz- und Gießvorgangs der Feingießtechnik, insbesondere der Dentaltechnik, mit einem Schmelztiegel zur Aufnahme von Schmelzgut, einer Heizeinrichtung zum Erhitzen des sich im Schmelztiegel befindenden Schmelzguts und einem Pyrometer zum Ermitteln der Temperatur des Schmelzguts.

Ferner betrifft die Erfindung ein Verfahren zur Durchführung eines Schmelz- und Gießvorgangs der Feingießtechnik, insbesondere der Dentaltechnik, insbesondere mit einer Gießvorrichtung der oben genannten Art, mit folgenden Schritten: Einbringen von Schmelzgut in einen Schmelztiegel, Erhitzen des Schmelzguts mittels einer Heizeinrichtung und Ermitteln der Temperatur des Schmelzguts mittels eines Pyrometers. Eine solche Vorrichtung und ein solches Verfahren sind beispielsweise aus US 4,796,688 bekannt.

Bekannt sind Gießvorrichtungen der Feingießtechnik der eingangs genannten Art, bei denen die Temperatur des Schmelzguts anhand eines Pyrometers gemessen wird und bei Erreichen eines bestimmten Temperaturwertes ein optisches bzw. akustisches Signal ausgegeben wird. Der Bediener der Gießvorrichtung erkennt dann anhand dieses Signals, dass er den anstehenden Gießvorgang manuell durchzuführen hat.

Aus US 4,796,688 ist ein Verfahren zum Steuern eines Schmelz- und Gießvorgangs bekannt, bei dem ein Vergleich der Abweichung der von einem Pyrometer gemessenen Temperaturwerte von den Sollwerten einer vorgegebenen Sollwertkurve in einem ersten Schmelz- und Gießvorgang gegenüber der Abweichung dieser Werte in einem zweiten Schmelz- und Gießvorgang vorgenommen wird. Sofern sich bei diesem Vergleich eine Übereinstimmung der Abweichungen zwischen den beiden Gießvorgängen ergibt, wird die Sollwertkurve, die sich im ersten Schmelz- und Gießvorgang bewährt hat, auch für den zweiten Schmelz- und Gießvorgang angewendet. Auf diese Weise kann zwar eine erstmalig bewährte Verfahrensführung für eine bestimmte Legierung bei nachfolgenden Schmelz- und Gießverfahren reproduzierbar verwendet werden, jedoch kann das empirische ermittelte Verfahren nur auf bereits zuvor beobachtete Abweichungen reagieren und wird daher stets dann zu einer unvorteilhaften Prozessführung führen, wenn Abweichungen auftreten, die bisher empirisch nicht beobachtet worden sind. Es besteht ein Bedarf für ein Verfahren, welches für bekannte Legierungen eine beliebige Prozessführung erlaubt und hierbei stets eine Schädigung des Schmelzguts sicher verhindern kann.

In der Feingießtechnik, insbesondere der Dentaltechnik werden Produkte, bspw. Zahnbrücken, Zahnkronen etc, hergestellt, bei denen es entscheidend auf die Genauigkeit und zwar innerhalb von Toleranzen von weniger als 0,1mm ankommt. Zur Herstellung derartiger Produkte wird eine flüssige Metalllegierung in eine Gießform gegossen. Aufgrund der hohen Gießtemperatur von bis zu 2000°C sowie den bei Zimmertemperatur angefertigten Abdrücken von Zähnen, den daraus anzufertigenden Modellen und Gießformen bestehen im Laufe des Herstellungsprozesses derartiger Produkte erhebliche Temperaturunterschiede. Da zudem die bei der Herstellung verwendete Materialien, bspw. der Abdruckmassen, Wachsmodellen, Gießformen und des herzustellenden Produkts, sehr unterschiedliche Eigenschaften aufweisen, können die daraus resultierenden unterschiedlichen Wärmeausdehnungskoeffizienten unter Umständen zu Überschreitungen der o.g. Teleranzen führen. Es werden daher ganz spezielle Materialien ausgewählt, deren unterschiedliche Ausdehnungskoeffizienten sich weitgehend kompensieren.

Einen wesentlichen Einfluss auf die Genauigkeit und damit die Einhaltung der o.g. Toleranzen hat jedoch auch die Temperatur während des Schmelz- und Gießvorgangs. Es ist daher wichtig, dass derartige Produkte unter vordefinierten, reproduzierbaren Bedingungen gegossen werden.

Der Temperaturermittlung während des Schmelz- und Gießvorgangs kommt daher eine wesentliche Bedeutung zu. Die Temperatur muss hierzu ebenfalls in einem sehr weiten Bereich von mehreren 100 bis ca. 2000°C exakt bestimmt werden können. Wie zuvor erläutert, werden hierzu sog. Pyrometer verwendet. Hierbei handelt es sich um berührungslos messende Temperaturmesssysteme, die von der Schmelze bzw. dem Schmelzgut abgestrahlte Infrarotstrahlung erfassen und die Strahlungsleistung messen. Die gemessene Strahlungsleistung ist jedoch im hohen Maße abhängig von dem sog. Emissionsgrad, der das Verhältnis aus dem realen Abstrahlwert eines Materials und dem Abstrahlwert des sog. (idealen) schwarzen Strahlers angibt. Der Emissionsgrad kann daher maximal 1 betragen, das heißt das betreffende Material entspricht dem idealen schwarzen Strahler. Der minimale Emissionsgrad beträgt demgegenüber 0. Körper, deren Emissionsgrad kleiner als 1 ist, werden graue Strahler genannt. Körper, deren Emissionsgrad zusätzlich temperatur- und wellenlängenabhängig ist, nennt man nicht-graue Strahler. Die in der Feingießtechnik verwendeten Materialien sind in der Regel derartige nicht-graue Strahler. Hinzu kommt, dass beim Erhitzen und Schmelzen von Metallen bzw. Metalllegierungen sich der Oberflächenzustand des Materials ändert. Selbst wenn die Oberfläche zunächst hochglänzend oder poliert war, wird sie sich während des Erhitzens und Aufschmelzens wesentlich verändern, insbesondere durch Oxidation oder Verzunderung. Hierdurch ändert sich der Emissionsgrad in erheblichem Maße.

Der Emissionsgrad von Metallen und Metalllegierungen, wie sie häufig in der Feingießtechnik eingesetzt werden, ist daher insbesondere von der Wellenlänge, der Temperatur und vom Material selbst abhängig. Diese Abhängigkeiten werden bei bekannten Vorrichtungen bzw. Verfahren zur Durchführung von Schmelz- und Gießvorgängen in der Feingießtechnik nicht oder nur unzureichend berücksichtigt. Dies führt zu einer Reduzierung der Präzision der herzustellenden Produkte.

So zeigen zwar US 4,796,688 oder DE 33 45 542 A1 ebenfalls eine Vorrichtung zur Durchführung eines Schmelz- und Gießvorgangs mit einem Schmelztiegel zur Aufnahme von Schmelzgut, einer Heizeinrichtung zum Erhitzen des Schmelzguts und einem Infrarot-Strahlungssensor, der oberhalb eines Schauglases angebracht ist. Der Schmelz- und Gießvorgang wird auch in Abhängigkeit einer voreingestellten Gießtemperatur gesteuert. Schließlich wird der Schmelz- und Gießvorgang gemäß einem von mehreren Grundprogrammen durchgeführt, wobei die verschiedenen Grundprogramme unterschiedliche Legierungen berücksichtigen. Insgesamt ist aber nur vorgesehen, schmelzgutmaterialspezifische Parameter zur Steuerung des Schmelz- und Gießvorgangs, das heißt in Abhängigkeit des Schmelzgutmaterials vorzusehen.

US 4,647,222 zeigt ebenfalls eine Temperaturmessvorrichtung für eine Gießvorrichtung, die zur Temperaturmessung eine IR-Diode aufweist, die Teil einer Regelschaltung ist. Dieser Diode sind Bauteile zur Verstärkung und Auswertung des IR-Temperatursignals nachgeordnet, nämlich ein Verstärker, eine Anzeige, eine Vergleichsschaltung (Komparator), ein Einstellglied und ein weiterer Verstärker, mit dem das vom Komparator gefundene Vergleichssignal verstärkt und ggf. über weitere Schaltelemente einer Heizung für den Tiegel zugeführt wird. Am Einstellglied kann die gewünschte Temperatur der Metallschmelz vorgegeben werden. Der Komparator erzeugt aus dem tatsächlich gemessenen Temperatursignal und dem vorgegebenen Soll-Wert ein Stellsignal, das über den Verstärker der Heizung zugeführt wird, wobei die Heizung den Schmelztiegel aufheizt. Die dabei entstehende Wärmestrahlung der Metallschmelze wird über ein Glasfaserkabel der IR-Diode zugeführt. Steigende Temperaturen der Metallschmelze führen dann zu einer Reduzierung des Stellsignals, so dass nach Erreichen der gewünschten Temperatur der Abguss erfolgen kann. Insgesamt ist aber nur vorgesehen, eine Temperatur der Metallschmelze anhand einer vorgegebenen Temperatur zu regeln.

US 2001/0050942 A1, US 3,788,382 und FR 2 776 382 A zeigen lediglich die Verwendung von Pyrometern im allgemeinen.

Der Erfindung liegt daher das Problem zugrunde, die Qualität von bei einem Schmelz- und Gießvorgang hergestellten Produkten zu verbessern.

Die Erfindung löst dieses Problem durch eine Vorrichtung gemäß Anspruch 1 sowie durch ein Verfahren gemäß Anspruch 21.

Die Erfindung stimmt das verwendete Pyrometer auf die Eigenschaften des jeweils verwendeten Schmelzguts automatisch ab, indem aus einer Datenbank für jedes Material bzw. bei jedem Materialwechsel die entsprechenden Konfigurationsdaten für das Pyrometer ausgelesen und das Pyrometer entsprechend eingestellt wird. Das Pyrometer wird auf diese Weise jeweils auf die unterschiedlichen, zum Einsatz kommenden Materialien abgeglichen.

Die mittels des Pyrometers ermittelte Temperatur kann daher sehr exakt bestimmt und somit der Schmelz- und Gießvorgang unter optimalen Bedingungen durchgeführt werden.

Ferner wird der Schmelz- und Gießvorgang in Abhängigkeit der ermittelten Schmelzguttemperatur, das heißt automatisch und nicht manuell gesteuert. Somit kann der komplette Schmelz- und Gießvorgang ohne Zugriff durch den Bediener und somit personenunabhängig durchgeführt werden. Die in der Datenbank gespeicherten Parametersätze gewährleisten auf diese Weise einen optimalen Gießprozess, bei dem die Temperatur der Schmelze jederzeit exakt erfasst werden kann. Der auf diese Weise ausgeführte Gießvorgang ist somit immer wieder reproduzierbar.

Bei einer bevorzugten Ausführungsform ist das Pyrometer ein Quotientenpyrometer. Ein Quotientenpyrometer weist zwei optische und elektrische Messkanäle auf. Man spricht daher auch von einem Zweikanalpyrometer. Jeder der beiden Kanäle misst in unterschiedlichen, jedoch möglichst dicht beieinanderliegenden Wellenlängenbereichen, die zudem schmalbandig ausgelegt sind. Damit sind die Auswirkungen materialspezifischer Besonderheiten, wie Reflektion oder Emission des Schmelzguts bei beiden Wellenlängen annähernd gleich. Durch eine Quotientenbildung der von den beiden Kanälen gemessenen Strahlungsintensitäten werden bestimmte Messeinflüsse, insbesondere der Emissionsgrad eliminiert. Daher kann bei Einsatz eines Zweikanalpyrometers der negative Einfluss des sich änderndes Emissionsgrades weitgehend vermieden werden. Der Einsatz eines Quotientenpyrometers ist daher besonders vorteilhaft.

Bei einer weiteren bevorzugten Ausführungsform weist jeder Parametersatz einen oder mehrere Parameter zur Steuerung des Schmelz- und Gießvorganges in Abhängigkeit des Schmelzgutmaterials auf. Somit wird zusätzlich auch der komplette Schmelz- und Gießvorgang von schmelzgutmaterialspezifischen Parametern, das heißt in Abhängigkeit des jeweils verwendeten Schmelzguts, gesteuert. Der Schmelz- und Gießprozess ist somit - ebenso wie die Pyrometerkonfiguration - auf das verwendete Schmelzgutmaterial abgeglichen.

Weitere vorteilhafte Ausführungsformen der Erfindung ergeben sich aus den Unteransprüchen sowie aus den in der Zeichnung dargestellten Ausführungsbeispielen. In der Zeichnung zeigen:

Fig. 1      eine Schnittansicht einer Gießvorrichtung mit einer Steuerungseinrichtung und einem Pyrometer gemäß einem Ausführungsbeispiel der Erfindung in vereinfachter Darstellung; und

Fig. 2      eine schematische Darstellung des Inhalts einer Datenbank der Steuerungseinrichtung aus Fig. 1.

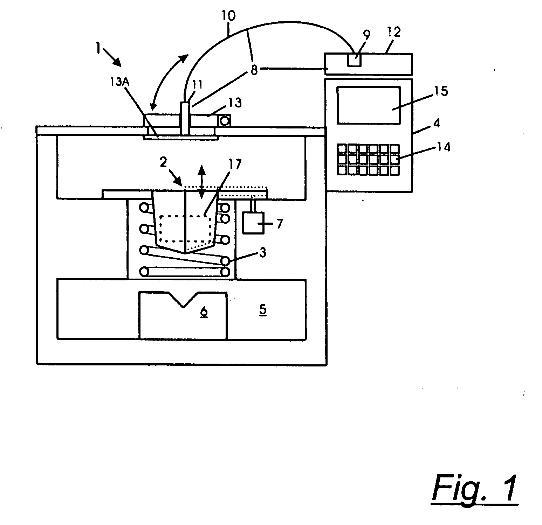

Fig. 1 zeigt eine Vorrichtung 1 zum Durchführen eines Schmelz- und Gießvorgangs der Feingießtechnik, wie sie insbesondere in der Dentaltechnik von Dentallabors verwendet wird. Die Vorrichtung weist einen Schmelztiegel 2 zur Aufnahme von Schmelzgut (nicht dargestellt) sowie eine Heizeinrichtung 3 zum Erhitzen des sich im Schmelztiegel 2 befindenden Schmelzguts auf.

Die Heizeinrichtung 3 ist im dargestellten Ausführungsbeispiel ein Induktionsofen, mittels dessen insbesondere metallische Stoffe durch Induktion erhitzt werden können. Die Erfindung ist jedoch nicht auf derartige Induktionsöfen beschränkt. Alternativ ist beispielsweise eine widerstandsbeheizte Heizeinrichtungen vorgesehen. Die Heizeinrichtung 3 wird von einem Generator (nicht dargestellt) mit elektrischer Energie gespeist. Der Generator, das heißt die Generatorleistung und damit auch die Heizleistung wird von einer Steuerungseinrichtung 4 gesteuert.

Unterhalb des Schmelztiegels 2 und unterhalb der Heizeinrichtung 3 befindet sich eine Kammer 5 zur Aufnahme einer Gießform 6, in welche flüssiges Schmelzgut aus dem Schmelztiegel 2 hineingegossen werden kann, um bspw. Zahnbrücken, Zahnkronen oder andere Produkte der Feingießtechnik herzustellen.

Um das Schmelzgut aus dem Schmelztiegel 2 in die Gießform 6 geben zu können, ist der Schmelztiegel in der dargestellten Ausführungsform zweigeteilt. Eine Hälfte, nämlich in Fig. 1 die rechte Hälfte, ist höhenverstellbar. Aufgrund der vertikalen Zweiteilung des Schmelztiegels entsteht durch ein Anheben der rechten Hälfte des Schmelztiegels 2 im unteren Bereich des Schmelztiegels eine Öffnung, so dass sich das Schmelzgut in die Gießform 6 ergießen kann.

Die rechte Hälfte des Schmelztiegels 2 ist zu diesem Zweck mit einer Betätigungseinrichtung 7 mechanisch gekoppelt, die in der Lage ist, die rechte Hälfte des Schmelztiegels 2 anzuheben und abzusenken. Die Betätigungseinrichtung 7 steht ebenfalls in Verbindung mit der Steuerungseinrichtung 4, so dass die Steuerungseinrichtung 4 automatisch das Öffnen des Schmelztiegels und damit den Gießvorgang einleiten kann.

Die Erfindung ist jedoch nicht auf derartige zweigeteilte Tiegel beschränkt. Alternativ kann der Gießvorgang auch durch ein Kippen eines einteilig ausgebildeten Schmelztiegels herbeigefügt werden. Jedoch ist ein zweigeteilter Schmelztiegel 2 vorzuziehen, da das Schmelzgut bei einer derartigen Ausbildung des Tiegels nicht über die vergleichsweise kalte Tiegelwand läuft, bevor es in die Gießform 6 hineintritt.

Die Kammer 5 ist als Druckkammer ausgebildet. Vor und während eines Gießvorgangs wird diese Druckkammer 5 evakuiert, so dass ein Vakuum innerhalb der Druckkammer 5 entsteht. Ein derartiges Vakuum während des Gießvorgangs ist vorteilhaft, da es verhindert, dass sich Einschlüsse oder Luftblasen innerhalb des herzustellenden Produktes bilden. Nachdem das Schmelzgut in die Gießform 6 gegeben worden ist, wird jedoch innerhalb der Kammer 5 ein Überdruck erzeugt, um das Schmelzgut in alle Bereiche der Gießform 6 hineinzupressen. Die Kammer 5 ist hierzu mit einer Unter-/Überdruckpumpe (nicht dargestellt) verbunden, die ebenfalls mit der Steuerungseinrichtung 4 elektrisch verbunden ist, damit die Steuerungseinrichtung 4 den Unter- oder Überdruck in der Kammer 5 einstellen kann.

Während des gesamten Gießprozesses ist die jeweils aktuelle Temperatur des Schmelzguts von besonderem Interesse. Diese Temperatur wird berührungslos mittels eines Pyrometers 8 gemessen. Das Pyrometer weist einen im Infrarotbereich arbeitenden Sensor 9 auf, der über einen Lichtwellenleiter 10 mit einer Optik 11 verbunden ist. Der Sensor 9 ist über optoelektronische Bauelemente mit einer Elektronik 12 des Pyrometers 8 gekoppelt, die optische Signale bzw. Lichtsignale in elektrische Signale umwandeln, aus denen dann die vom Sensor 9 erfasste Strahlungsleistung in einen Temperaturwert umgerechnet werden kann. Auf diese Weise ist es möglich, den empfindlichen Sensor 9 sowie die empfindliche Elektronik 12 weit außerhalb des Bereichs des Induktionsofens 3 anzuordnen, so dass elektromagnetische Unverträglichkeiten auf diese Weise wirksam vermieden werden können.

Die Optik 11 ist innerhalb eines Schaufensters 13 untergebracht, das einen Einblick in den Schmelztiegel 2 ermöglicht. Das Schaufenster 13 ist aufklappbar ausgebildet, so dass es ohne weiteres geöffnet werden kann. Die Optik 11 ist jedoch derart an dem Schaufenster 13 angeordnet, dass sie bei geschlossenem Schaufenster 13 durch das Kammerfenster 13A wenigstens auf einen Teilbereich des Schmelztiegels ausgerichtet ist.

Bei alternativen Ausführungsformen ist die Optik innerhalb eines das Innere der Vorrichtung 1 fest umschließenden Gehäuses untergebracht, bei dem kein Schaufenster 13 vorhanden ist.

Alternativ kann der Sensor 9 direkt ohne Zwischenschaltung eines Lichtwellenleiters 10 in unmittelbarer Nähe des Schmelztiegels, beispielsweise im Bereich des Schaufensters 13 angeordnet sein, insbesondere wenn die Heizeinrichtung kein - eine hohe elektromagnetische Strahlung aussendender - Induktionsofen, sondern beispielsweise ein widerstandbeheizter Ofen ist.

Bei dem Pyrometer handelt es sich vorzugsweise um ein sogenanntes Quotientenpyrometer (auch Zweikanal-, Zweifarben- oder Verhältnispyrometer genannt). Dieses Quotientenpyrometer verfügt über zwei im wesentlichen baugleiche optische und elektrische Messkanäle. Beide Messkanäle arbeiten in zwei unterschiedlichen Wellenlängenbereichen, die jedoch sehr schmalbandig und nahe beieinanderliegend ausgelegt sind. Hierdurch sind die Folgen materialspezifischer Eigenschaften, wie Reflektion und Emission am Schmelzgut bei beiden Wellenlängen im wesentlichen gleich. Durch eine mathematische Quotientenbildung lassen sich auf diese Weise verschiedene Messeinflüsse, wie bspw. der Emissionsgrad eliminieren, so dass die Messung weitgehend unabhängig vom tatsächlichen Emissionsgrad erfolgen kann.

Das Quotientenpyrometer kann auf verschiedene Weisen ausgebildet sein:

Bei einer ersten Variante erfolgt die Aufteilung der vom Pyrometer erfassten Messstrahlung mit Hilfe zweier Filter, welche vor dem Sensor rotierend angebracht sind. Die Messung der erfassten Strahlung erfolgt dann in beiden Kanälen zeitlich nacheinander.

Bei einer zweiten Variante erfolgt die Aufteilung der erfassten Messstrahlung mittels eines Strahlteilers, der die Messstrahlung auf zwei mit unterschiedlichen Filtern versehene Strahlungsdetektoren leitet. Auf diese Weise werden ebenfalls zwei Kanäle erfasst.

Bei einer dritten Variante gelangt die erfasste Strahlung ohne einen Strahlteiler auf einen einen Filter aufweisenden Doppelsensor, bei dem ein vorderer Sensor gleichzeitig den Filter für einen zweiter dahinterliegenden Sensor darstellt.

Die mittels des Pyrometers 8 ermittelte Temperatur wird der Steuerungseinrichtung 4 zugeleitet, die den Schmelz- und Gießvorgang in Abhängigkeit der ermittelten Temperatur steuert bzw. regelt. Die Steuerungseinheit weist eine Eingabeeinheit 14 zur Eingabe einer Schmelzgutidentifikation oder anderer Eingangsgrößen und Prozessgrößen auf.

Die Steuerungseinrichtung 4 weist ferner eine Anzeige 15 auf, um dem Benutzer eingegebene Daten oder Prozessdaten anzuzeigen.

Ferner weist die Steuerungseinrichtung 4 eine Kommunikationsschnittstelle (nicht dargestellt) zur Eingabe und Ausgabe von Daten auf, insbesondere zur Ergänzung und/oder Aktualisierung der Daten einer der Steuerungseinrichtung 4 zugeordneten Datenbank, von Parametersätzen, einzelnen Parametern und/oder von komplexen Steuerungsprogrammen und/oder zum Auslesen von Protokollen und/oder Parametern eines durchgeführten Schmelz- und Gießvorgangs auf.

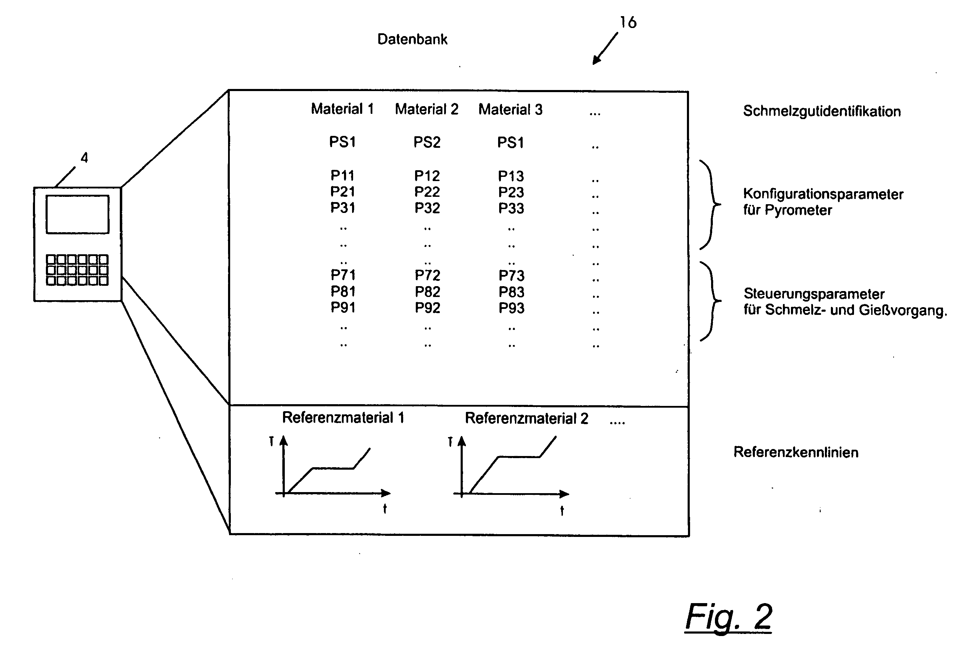

Fig. 2 zeigt den Aufbau einer derartigen, der Steuerungseinrichtung 4 zugeordneten Datenbank 16. Die Datenbank enthält mehrere einzeln auswählbare schmelzgutmaterialspezifische Parametersätze PS1, PS2, PS3, die jeweils eine Reihe von Parametern P11, P12, P13, ... P21, P22, P23, ... P31, P32, P33, ... aufweisen. Jeder Parametersatz enthält ein oder mehrere Parameter P1.., P2.., P3.. zur Konfiguration des Pyrometers 8. Ferner weist jeder Parametersatz einen oder mehrere Parameter P7.., P8.., P9.. zur Steuerung des Schmelz- und Gießvorgangs in Abhängigkeit des verwendeten Schmelzgutmaterials auf.

Auf diese Weise wird einem bestimmten Schmelzgutmaterial ein bestimmter Parametersatz zugeordnet, der einerseits das Pyrometer in Abhängigkeit der Schmelzgut-Materialeigenschaften konfiguriert und andererseits Parameter enthält, mittels derer ein Schmelz- und Gießvorgang optimal und insbesondere reproduzierbar durchführbar ist.

Bei einer besonderen Variante werden zur genauen Konfiguration des Pyrometers und des Schmelz- und Gießvorgangs materialspezifische Informationen in Materialfamilien bzw. Legierungsfamilien mit im wesentlichen gleichartigen Parametersätzen eingeteilt.

Bei den vorstehend genannten Parametern handelt es sich zum einen um die folgenden Parameter, die insbesondere zur Konfiguration des Pyrometers, jedoch auch zur Steuerung des Schmelz- und Gießvorgangs verwendet werden: Solidustemperatur; Liquidustemperatur; Emissionsgradverhältnis; Angabe über das Vorhandensein bzw. Fehlen von Hilfseinrichtungen im Bereich des Schmelztiegels, wie bspw. Graphiteinsätzen, welche die Pyrometermessung beeinflussen können.

Des weiteren handelt es sich um folgende Parameter, die insbesondere zur Steuerung des Schmelz- und Gießvorgangs verwendet werden: Gießtemperatur; verfahrenstechnische Parameter, wie beispielsweise Höhe einer Reduzierung der Heizleistung bei Erreichen einer bestimmten Temperatur, zum Beispiel der Liquidustemperatur; die Zeitdauer des Konstanthaltens der Gießtemperatur bis zum Einleiten eines Gießvorgangs; Stützwerte vordefinierter Aufheizkurven, welche die einzustellende Heizleistung in Abhängigkeit der Temperatur angeben; Parameter zum zeitlichen Ablauf des Gießvorgangs ab Einleitung des Gießvorgangs unter Unterdruck bzw. Vakuum bis zum Erzeugen von Überdruck bzw. Pressdruck; die Werte des Vakuumdrucks sowie des Überdrucks.

Die dargestellte Gießvorrichtung 1 kann mittels der Steuerungsvorrichtung 4 in mehreren Bedienungsarten betrieben werden:

In einer ersten Bedienungsart kann ein Benutzer anhand einer einzugebenden Identifikation oder Kennziffer, mittels derer insbesondere eine bestimmte Legierung identifiziert wird, ein fest in der Steuerungseinrichtung gespeichertes oder ein von einem externen Datenträger gelesenes Schmelz- und Gießprogramm anwählen, mittels dessen der Schmelz- und Gießprozess im einzelnen gesteuert wird.

Bei einer zweiten Bedienungsart kann der Benutzer selber eigene Schmelz- und Gießprogramme eingeben und in der Steuerungsvorrichtung 4 bzw. in der Datenbank 16 abspeichern. Diese Bedienungsart ist insbesondere dann relevant, wenn der Benutzer Legierungen anderer Hersteller oder selbst erzeugte Legierungen verarbeitet.

Bei einer dritten Bedienungsart gibt der Benutzer manuelle Prozessparameter, wie die Generatorleistung, das Vakuum während des Gießprozesses sowie die Gießtemperatur ein, um auf diese Weise einen individuellen Schmelz- und Gießvorgang durchzuführen.

Bei einer vierten Bedienungsart wird die Steuerung in einen sogenannten Lernmodus geschaltet, innerhalb derer sie selber die Solidus-Liquidus-Kennlinie einer bestimmten Legierung erkennt und aufnimmt.

Die verschiedenen Bedienungsarten sind über die Eingabeeinheit 14 auswählbar.

Im folgenden wird ein bevorzugter Ablauf des Schmelz- und Gießvorgangs beschrieben.

Ein Benutzer wählt zunächst ein zu verarbeitendes Schmelzgut aus und bringt dieses in den Schmelztiegel 2 ein. Zugleich bzw. kurz davor oder kurz danach gibt der Benutzer über die Eingabeeinheit 14 eine Kennung, bspw. eine Kennziffer, über die Eingabeeinheit 14 ein, die von der Steuerungseinrichtung 4 verarbeitet wird. Die Steuerungseinrichtung 4 wählt anhand dieser Kennung aus einer Datenbank einen von mehreren Parametersätzen aus, und zwar denjenigen, der der entsprechenden Kennung zugeordnet ist. Anhand eines oder einiger der Parameter des ausgewählten Parametersatzes konfiguriert die Steuerungseinrichtung das Pyrometer 8 und zwar insbesondere die Pyrometerelektronik 12. Durch diesen Konfigurationsvorgang kann die Temperaturmessung mittels des Pyrometers 8 exakt an die besonderen Eigenschaften des verwendeten Schmelzguts angepasst werden.

Das Pyrometer ermittelt sodann fortlaufend die Temperatur des in den Schmelztiegel 2 eingebrachten Schmelzguts. Gleichzeitig steuert die Steuerungseinrichtung 4 die Heizeinrichtung 3, bspw. den durch eine Induktionsspule fließenden Induktionsstrom eines Induktionsofens. Hierdurch erhitzt sich das Schmelzgut, das durch die Induktion aufgeheizt wird. Der Aufheizprozess wird durch das Pyrometer fortlaufend kontrolliert. In Abhängigkeit der von dem Pyrometer 8 ermittelten Schmelzguttemperatur wird der Aufheizvorgang, insbesondere die Heizleistung der Heizeinrichtung 3, bspw. der Induktionsstrom, gesteuert und somit auch der gesamte Schmelz- und Gießvorgang.

Der gewählte Parametersatz enthält zudem weitere Parameter über den Schmelz- und Gießvorgang. Auf diese Weise wird der Schmelz- und Gießvorgang an die besonderen Eigenschaften des verwendeten Schmelzguts angepasst.

Während dieses Vorgangs wird die Schmelze bei Erreichen einer vorbestimmten Temperatur für eine vorbestimmte Zeitdauer im wesentlichen konstant gehalten. Bei Erreichen dieser oder einer anderen vorbestimmten Temperatur der Schmelze wird die Heizleistung der Heizeinrichtung reduziert. Auf diese Weise wird das verwendete Schmelzgut in besonders schonender Weise bis zur Gießtemperatur erwärmt.

Bei einem besonders vorteilhaften Ausführungsbeispiel ermittelt die Steuerungseinrichtung 4 anhand des während des Schmelzvorgangs ermittelten Schmelzguttemperaturverlaufs, insbesondere der ermittelten Solidustemperatur und/oder der ermittelten Liquidustemperatur, um welches Schmelzgut es sich handelt und wählt sodann automatisch, d.h. ohne Eingabe der Kennung des Schmelzgutes durch den Bediener, den diesem Schmelzgut zugeordneten Parametersatz aus. Somit können Fehlbedienungen vollständig ausgeschlossen werden, wodurch die Zuverlässigkeit der Schmelz- und Gießvorrichtung 1 erhöht wird.

Bei einem weiteren Ausführungsbeispiel befindet sich, wie in Fig. 1 durch eine gestrichelte Linie dargestellt, innerhalb des Schmelztiegels 2 oder im Bereich des Schmelztiegels 2 ein Hilfsmittel zur Unterstützung des Heizvorgangs, bspw. ein röhrenförmiger Graphiteinsatz 17. Der Graphiteinsatz 17 wird durch im Graphiteinsatz 17 induzierte Ströme erhitzt und dabei zum Glühen gebracht. Hierbei verbrennt innerhalb der - den Schmelztiegel 2 einschließenden - Schmelzkammer vorhandener Restsauerstoff zu Kohlendioxyd. Hierdurch wird ein Oxydation der Schmelze verhindert, da ein Schutzgas entsteht.

Ein weiterer Vorteil des Graphiteinsatzes 17 besteht darin, dass die Schmelze schonend aufgeschmolzen wird, da das Schmelzgut primär durch von dem Graphiteinsatz 17 ausgehender Wärmestrahlung und nur noch teilweise durch direkte von der Induktionsspule des Induktionsofens verursachter Induktion erwärmt wird. Dies hat zur Folge, dass das visuelle Schmelzbild verbessert wird, da die Schmelze weniger durch Magnetfelder in Bewegung versetzt wird.

Der Graphiteinsatz 17 hat jedoch einen sehr hohen Emissionsgrad. Er heizt sich ferner auch schneller als das Schmelzgut auf. Daher erfasst das Pyrometer 8 auch von dem Graphiteinsatz ausgehende Wärmestrahlung und misst somit eine überlagerte Temperatur von Graphiteinsatz 17 und Schmelzgut.

Es findet jedoch nach einem Zeitraum $t_v$ ein weitgehender Temperaturausgleich zwischen dem Graphiteinsatz 17 und der Schmelze statt. Dieser Zeitraum $t_v$ ist um so kürzer, je höher die Temperatur des Graphiteinsatzes 17 liegt. Ursache hierfür ist eine bessere Wärmeübertragung durch Wärmestrahlung bei höheren Temperaturen, die von der vierten Potenz der Temperatur abhängt. Der Zeitraum $t_v$ wird bei hohen Temperaturen $T_o$ im Bereich von 1300°C bis 1600°C, beispielsweise von ca. 1400°C, im wesentlichen zu null.

Demgegenüber verbleibt bei niedrigeren Temperaturen $T_u$, im Bereich von 800°C bis 1100°C, beispielsweise von 1000°C, eine Temperaturdifferenz $T_Ü = T_{const.}$ zwischen dem Graphiteinsatz 17 und dem Schmelzgut, wobei $T_{const.}$ im Bereich von 50°C - 250°C, insbesondere 80°C - 180°C, liegt bzw. $T_{const.}$ im wesentlichen 100°C beträgt. Diese Temperaturdifferenz $T_Ü$ wird jedoch bei den o.g. hohen Temperaturen $T_o$ im Bereich von 1300°C bis 1600°C, beispielsweise von ca. 1400°C ebenfalls im wesentlichen zu null.

Bei einem bevorzugten Ausführungsbeispiel erfolgt daher eine Kompensation der vorstehend beschriebenen Effekte, indem die ermittelte Schmelzguttemperatur beim Vorhandensein eines Graphiteinsatzes 17 um den Temperaturdifferenzwert $T_Ü$ reduziert wird und zwar insbesondere gemäß der folgenden Näherungsgleichung, in der $T_G$ die Gießtemperatur, $T_o$ ein oberer empirischer ermittelter Temperaturwert im o.g. Bereich, $T_u$ ein unterer empirischer ermittelter Temperaturwert im o.g. Bereich und $T_{const.}$ eine ebenfalls empirisch ermittelte Temperaturkonstante im o.g. Bereich ist:

$$T_{\ddot{U}} = ((T_o - T_G)/(T_o-T_u)) * T_{const.}$$

Für ein bevorzugtes Ausführungsbeispiel gilt:

$$T_{\ddot{U}} = ((1400°C - T_G)/(1400°C-1000°C)) * 100°C$$

Ferner wird ein bestimmter Zeitpunkt, bspw. der Gießzeitpunkt beim Vorhandensein eines Graphiteinsatzes 17 um die Zeitdauer $t_v$ verschoben, das heißt es wird diese Zeitdauer $t_v$ abgewartet, bevor der Gießvorgang eingeleitet wird. Diese Zeitdauer $t_v$ nimmt bei den o.g. niedrigen Temperaturen $T_u$ einen Wert $t_{const.}$ im Bereich von 10 - 120 Sekunden an und beträgt insbesondere im wesentlichen 60 Sekunden und wird bei höheren Temperaturen $T_o$ im wesentlichen zu null. Diese Zeitdauer $t_v$ wird vorzugsweise gemäß der folgenden Gleichung bestimmt, wobei $T_o$, $T_u$, $T_G$ und $t_{const.}$ in den o.g. Wertebereichen liegen:

$$t_v = ((T_o - T_G)/(T_o-T_u)) * t_{const.}$$

Für ein bevorzugtes Ausführungsbeispiel gilt:

$$t_v = ((1400°C - T_G)/(1400°C-1000°C)) * 60sec$$

Da diese Formeln nur ein linear genähertes Ergebnis liefern, ist in einer weiteren Ausgestaltung der Erfindung zur genauen Berechnung der Werte für $T_{\ddot{U}}$ und $t_v$ ein Polynom n-ten Grades vorgesehen.

Im einzelnen wird daher bevorzugt der Schmelz- und Gießvorgang wie folgt ablaufen:

Nachdem das Schmelzgut gemäß dem oben beschriebenen Verfahren auf die Gießtemperatur unter Berücksichtigung der vorstehend genannten Temperaturdifferenz $T_{\ddot{U}}$ gebracht worden ist, wird eine Zeitdauer $t_v$ gemäß der oben genannten Näherungsgleichung abgewartet.

Sodann wird während abgeschalteter Energiezufuhr zur Heizeinrichtung 3 eine auf ca. 700 bis 1050°C vorgeheizte Gießform 6 in die Kammer 5 eingebracht. Die Zeitdauer der Abschaltung der Energiezufuhr liegt in der Größenordnung von 10 sec.

Anschließend wird die Kammer 5 evakuiert, das heißt es wird ein Vakuum hergestellt. Nun wird die Schmelze erneut auf die beabsichtigte Gießtemperatur aufgeheizt und zwar wiederum unter Berücksichtigung der oben genannten Temperaturdifferenz $T_{\ddot{U}}$. Sodann wird eine Zeitdauer von etwa 1/3 $t_v$ abgewartet und sodann der Gießvorgang eingeleitet.

Wie erläutert, beeinflusst der Graphiteinsatz 17 im erheblichen Maße die Temperaturmessung. Bei einem besonderen Ausführungsbeispiel wird daher in Abhängigkeit des Vorhandenseins bzw. des Fehlens eines derartigen Graphiteinsatzes 17 ein jeweils anderer Parametersatz ausgewählt bzw. ein Parametersatz enthält einen entsprechenden Parameter, der das Vorhandensein bzw. das Fehlen eines derartigen Graphiteinsatzes 17 angibt, um dann innerhalb der Steuerungseinrichtung 4 eine entsprechende Kompensation der oben erläuterten im Zusammenhang mit dem Graphiteinsatz 17 stehenden Effekte durchzuführen und zwar gemäß den oben genannten Gleichungen.

Das Vorhandensein bzw. Fehlen eines Graphiteinsatzes kann entweder durch manuelle Eingabe über die Eingabeeinheit 14 der Steuerungseinrichtung mitgeteilt werden. Alternativ ist ein Detektor zur Erkennung eines derartigen Hilfsmittels vorgesehen. Hierbei handelt es sich entweder um einen Kontaktsensor, oder einen mit dem Tiegel 2 in Verbindung stehenden Gewichtssensor. Das Vorhandensein eines Graphiteinsatzes kann jedoch auch aus den elektrischen Größen des Induktionsofens ermittelt werden, da diese durch das Einbringen eines Graphiteinsatzes beeinflusst werden. Jedweder dieser Detektoren ist mit der Steuerungseinrichtung 4 verbunden, damit sie automatisch die oben beschriebenen Kompensationen vornehmen kann.

Die Steuerungseinrichtung 4 weist bei einem weiteren Ausführungsbeispiel einen Pyrometerkalibrierungsmodus auf, in dem die Steuerungseinrichtung 4 Kalibrierungsparameter zum Kalibrieren des Pyrometers 8 in Abhängigkeit eines mit einem bestimmten Referenzschmelzgut ermittelten Temperaturverlaufs, insbesondere der Solidus-Liquidus-Temperaturkennlinie, einstellt. Hierzu wird ein Referenzschmelzgut, vorzugsweise ein reines Metall, wie reines Kupfer, in den Schmelztiegel 2 gegeben und ein Schmelzvorgang durchgeführt. Das Pyrometer 8 ermittelt während des Schmelzvorgangs den Temperaturverlauf und vergleicht diesen Temperaturverlauf mit einer in der Datenbank 16 hinterlegten Referenzkennlinie, insbesondere Solidus-Liquidus-Referenzkennlinie des verwendeten Referenzschmelzguts. Anhand des Vergleichsergebnisses wird das Pyrometer 8 überprüft und ggf. kalibriert.

Dank der Erfindung kann die Temperaturmessung während eines Schmelz- und Gießvorgangs in der Feingießtechnik wesentlichen genauer durchgeführt und somit der Gießvorgang exakt und immer wieder reproduzierbar durchgeführt werden. Aufgrund der automatischen Konfigurierung des Pyrometers und des Schmelz- und Gießvorgangs werden menschliche Fehlbedienungen weitestgehend ausgeschlossen. Dank der Erfindung kann daher der Anteil fehlerhafter Produkte deutlich reduziert und somit die Stückkosten vermindert werden.

**Patentansprüche**

1. Vorrichtung zur Durchführung eines Schmelz- und Gießvorgangs der Feingießtechnik, insbesondere der Dentaltechnik, mit

   - einem Schmelztiegel (2) zur Aufnahme von Schmelzgut,
   - einer Heizeinrichtung (3) zum Erhitzen des sich im Schmelztiegel (2) befindenden Schmelzguts und
   - einer Steuerungseinrichtung (4) zur Steuerung des Schmelz- und Gießvorgangs in Abhängigkeit der ermittelten Schmelzguttemperatur,
   - wobei die Steuerungseinrichtung (4) eine Datenbank (16) mit mehreren auswählbaren, jeweils schmelzgutmaterialspezifischen Parametersätzen (PS1, PS2, PS3) aufweist, und
   - einem Pyrometer (8) zum Ermitteln der Temperatur des Schmelzguts,

   **dadurch gekennzeichnet, dass**

   - jeder Parametersatz (PS1, PS2, PS3) jeweils einen oder mehrere Pyrometer-Konfigrationsparameter (P11, P21, P31; P12, P22, P32; P13, P23, P33) zum Konfigurieren des Pyrometers (8) aufweist und das Pyrometer (8) mittels dieser Pyrometer-Konfigurationsparameter (P11, P21, P31; P12, P22, P32; P13, P23, P33) auf die Eigenschaften des jeweiligen Schmelzguts abgestimmt ist.

2. Vorrichtung nach Anspruch 1,
   **dadurch gekennzeichnet, dass**
   jeder Parametersatz (PS1, PS2, PS3) einen oder mehrereSteuerungsparameter (P71, P81, P91; P72, P82, P92; P73, P83, P93) zur Steuerung des Schmelz- und Gießvorgangs in Abhängigkeit des Schmelzgutmaterials aufweist.

3. Vorrichtung nach Anspruch 1 oder 2,
   **dadurch gekennzeichnet, dass**
   die Steuerungseinrichtung (4) eine Eingabeeinheit (14) zur Eingabe einer Schmelzgutidentifikation zur Auswahl eines Parametersatzes (PS1, PS2, PS3) aufweist.

4. Vorrichtung nach einem der vorhergehenden Ansprüche,
   **dadurch gekennzeichnet, dass**
   das Pyrometer (8) ein Quotientenpyrometer ist.

5. Vorrichtung nach einem der vorhergehenden Ansprüche,
   **dadurch gekennzeichnet, dass**
   ein bzw. mehrere Sensoren (9) des Pyrometers (8) mittels einer Optik (11) direkt auf wenigstens einen Teilbereich des Schmelztiegels (2) ausrichtbar sind.

6. Vorrichtung nach einem der Ansprüche 1 bis 4,
   **dadurch gekennzeichnet, dass**
   der bzw. die Sensoren (9) des Pyrometers (8) über einen Lichtwellenleiter (10) mit der Optik (11) verbunden ist/ sind, der auf wenigstens einen Teilbereich des Schmelztiegels (2) ausrichtbar ist.

7. Vorrichtung nach einem der vorhergehenden Ansprüche,

**dadurch gekennzeichnet, dass**
die Steuerungseinrichtung (4) eine Kommunikationsschnittstelle zur Ergänzung und/oder Aktualisierung der Datenbank (16), Parametersätze (PS1, PS2, PS3), Parameter und/oder von Steuerungsprogrammen und/oder zum Auslesen von Protokollen eines Schmelz- und Gießvorgangs und/oder von Parametern aufweist.

8. Vorrichtung nach einem der vorhergehenden Ansprüche,
   **dadurch gekennzeichnet, dass**
   jeder Schmelzgutidentifikation ein eigener Parametersatz (PS1, PS2, PS3) zugeordnet ist.

9. Vorrichtung nach einem der Ansprüche 1 bis 7,
   **dadurch gekennzeichnet, dass**
   jeweils einer Gruppe von mehreren Schmelzgutidentifikationen einer Schmelzgutfamilie, insbesondere Legierungsfamilie, mit im wesentlichen gleichen oder ähnlichen Schmelz- und Gießeigenschaften, ein individueller Parametersatz zugeordnet ist.

10. Vorrichtung nach einem der vorhergehenden Ansprüche,
    **dadurch gekennzeichnet, dass**
    die Heizeinrichtung (3) von der Steuerungseinrichtung (4) derart ausgebildet ist, dass eine vorbestimmte Temperatur der Schmelze im wesentlichen konstant gehalten wird.

11. Vorrichtung nach einem der vorhergehenden Ansprüche,
    **dadurch gekennzeichnet, dass**
    die Heizeinrichtung (3) von der Steuerungseinrichtung (4) derart steuerbar ist, dass bei Erreichen einer vorbestimmten Temperatur der Schmelze die Heizleistung der Heizeinrichtung (3) reduziert wird.

12. Vorrichtung nach einem der vorhergehenden Ansprüche,
    **dadurch gekennzeichnet, dass**
    die Steuerungseinrichtung (4) derart ausgebildet ist, dass sie in Abhängigkeit des während eines Schmelzvorgangs ermittelten Schmelzguttemperaturverlaufs, insbesondere der ermittelten Solidustemperatur und/oder der ermittelten Liquidustemperatur, einen Parameter auswählt.

13. Vorrichtung nach einem der vorhergehenden Ansprüche,
    **dadurch gekennzeichnet, dass**
    die Steuerungseinrichtung (4) in einem Pyrometerkalibrierungsmodus betreibbar ist, in dem die Steuerung Kalibrierungsparameter zum Kalibrieren des Pyrometers in Abhängigkeit des mit einem vorbestimmten Referenzschmelzgut ermittelten Temperaturverlaufs, insbesondere der Solidus-Liquidustemperaturkennlinie, einstellt.

14. Vorrichtung nach einem der vorhergehenden Ansprüche,
    **dadurch gekennzeichnet, dass**
    die Steuerungseinrichtung (4) in einem Prüfmodus betreibbar ist, in dem die Steuerung das Pyrometer (8) anhand des mit einem vorbestimmten Referenzschmelzgut ermittelten Temperaturverlaufs, insbesondere der Solidus-Liquidustemperaturkennlinie, überprüft.

15. Vorrichtung nach Anspruch 13 oder 14,
    **dadurch gekennzeichnet, dass**
    das Referenzschmelzgut ein reines Metall, insbesondere reines Kupfer ist.

16. Vorrichtung nach einem der vorhergehenden Ansprüche,
    **dadurch gekennzeichnet, dass**
    die Steuerungseinrichtung (4) den Schmelz- und Gießvorgang in Abhängigkeit vom Vorhandensein bzw. der Abwesenheit eines im Bereich des Schmelztiegels anordbaren Hilfsmittels (17), insbesondere Graphiteinsatzes, zur Unterstützung des Heizvorgangs steuert.

17. Vorrichtung nach Anspruch 16,
    **dadurch gekennzeichnet, dass**
    die ermittelte Schmelzguttemperatur beim Vorhandensein des Hilfsmittels (17) um einen Temperaturdifferenzwert $T_Ü$ reduziert wird.

**18.** Vorrichtung nach Anspruch 17,
**dadurch gekennzeichnet, dass**
der Temperaturdifferenzwert $T_{\ddot{U}}$ aus der Gießtemperatur $T_G$ näherungsweise gemäß folgender Gleichung ermittelt wird:

$$T_{\ddot{U}} = ((T_o - T_G)/(T_o - T_u)) * T_{const.}$$

wobei $T_o$ ein oberer Temperaturwert im Bereich von 1300°C bis 1600°C, insbesondere von 1400°C, $T_u$ ein unterer Temperaturwert im Bereich von 800°C bis 1100°C, insbesondere 1000°C und $T_{const.}$ eine Temperaturkonstante im Bereich von 50°C bis 250°C, insbesondere von 80°C bis 180°C, insbesondere 100°C ist.

**19.** Vorrichtung nach einem der Ansprüche 16 bis 18,
**dadurch gekennzeichnet, dass**
ein bestimmter Zeitpunkt während des Schmelz- und Gießvorgangs beim Vorhandensein des Hilfsmittels (17) um eine Ausgleichszeitdauer $t_v$ verschoben wird.

**20.** Vorrichtung nach Anspruch 19,
**dadurch gekennzeichnet, dass**
die Ausgleichszeitdauer $t_v$ aus der Gießtemperatur $T_G$ näherungsweise gemäß folgender Gleichung ermittelt wird:

$$t_v = ((T_o - T_G)/(T_o - T_u)) * t_{const.}$$

wobei $T_o$ ein oberer Temperaturwert im Bereich von 13C0°C bis 1600°C, insbesondere von 1400°C, $T_u$ ein unterer Temperaturwert im Bereich von 800°C bis 1100°C, insbesondere 1000°C und $t_{const.}$ eine Zeitkonstante im Bereich von 10 Sekunden bis 120 Sekunden, insbesondere 60 Sekunden, ist.

**21.** Verfahren zur Durchführung eines Schmelz- und Gießvorgangs der Feingießtechnik, insbesondere der Dentaltechnik, insbesondere mit einer Gießvorrichtung (1) nach einem der Ansprüche 1 bis 20, mit folgenden Schritten:

- Einbringen von Schmelzgut in einen Schmelztiegel (2),
- Erhitzen des Schmelzguts mittels einer Heizeinrichtung (3) und
- Steuern des Schmelz- und Gießvorgangs in Abhängigkeit einer mittelten Schmelzguttemperatur,
- wobei aus einer Datenbank (16) einer von mehreren schmelzgutmaterialspezfischen Parametersätzen (PS1, PS2, PS3) in Abhängigkeit des eingebrachten Schmelzguts ausgewählt wird, und
- die Temperatur des Schmelzguts mittels eines Pyrometers (8) ermittelt,

**dadurch gekennzeichnet, dass**

- das Pyrometer (8) mittels eines oder mehrerer Pyrometer-Konfigurationsparameter (P11, P21, P31; P12, P22, P32; P13, P23, P33) des ausgewählten Parametersatzes (PS1, PS2, PS3) auf die Eigenschaften des jeweiligen Schmelzguts abgestimmt wird.

**22.** Verfahren nach Anspruch 21,
**dadurch gekennzeichnet, dass**
der Schmelz- und Gießvorgang mittels eines oder mehrerer materialspezifischer Steuerungsparameter (P71, P81, P91; P72, P82, P92; P73, P83, P93) des ausgewählten Parametersatzes (PS1, PS2, PS3) gesteuert wird.

**23.** Verfahren nach Anspruch 21 oder 22,
**dadurch gekennzeichnet, dass**
ein Parametersatz (PS1, PS2, PS3) anhand einer mittels einer Eingabeeinheit eingegebenen Schmelzgutidentifikation ausgewählt wird.

**24.** Verfahren nach einem der Ansprüche 21 bis 23,
**dadurch gekennzeichnet, dass**
die Temperatur der Schmelze für eine vorbestimmte Zeitdauer auf einer vorbestimmten Temperatur im wesentlichen konstant gehalten wird.

**25.** Verfahren nach einem der Ansprüche 21 bis 24,
**dadurch gekennzeichnet, dass**
bei Erreichen einer vorbestimmten Temperatur der Schmelze die Heizleistung der Heizeinrichtung (3) reduziert wird.

**26.** Verfahren nach einem der Ansprüche 21 bis 25,
**dadurch gekennzeichnet, dass**
ein Parametersatz (PS1, PS2, PS3) anhand eines während eines Schmelzvorgangs ermittelten Schmelzguttemperaturverlaufs, insbesondere der ermittelten Solidustemperatur und/oder der ermittelten Liquidustemperatur, ausgewählt wird.

**27.** Verfahren nach einem der Ansprüche 21 bis 25,
**dadurch gekennzeichnet, dass**
ein Schmelzvorgang mit einem Referenzschmelzgut durchgeführt und ein Temperaturverlauf, insbesondere die Solidus-Liquidus-Temperaturkennlinie, ermittelt und mit einer in der Datenbank (16) hinterlegten Referenzkennlinie des Referenzschmelzgutes verglichen und mittels des Vergleichsergebnisses das Pyrometer (8) kalibriert und/oder geprüft wird.

**Claims**

**1.** Apparatus for carrying out a melting and casting operation by precision casting, in particular in dentistry, comprising

- a melting crucible (2) for receiving melting charge,
- a heating device (3) for heating the melting charge in the melting crucible (2) and
- a control device (4) for controlling the melting and casting operation as a function of the ascertained melting charge temperature,
- wherein the control device (4) has a database (16) with a plurality of selectable, respectively melting charge material-specific parameter sets (PS1, PS2, PS3) and
- a pyrometer (8) for ascertaining the temperature of the melting charge,

**characterised in that**

- each parameter set (PS1, PS2, PS3) respectively has one or more pyrometer configuration parameters (P11, P21, P31; P12, P22, P32; P13, P23, P33) for configuring the pyrometer (8) and the pyrometer (8) is adapted to the properties of the respective melting charge using these pyrometer configuration parameters (P11, P21, P31; P12, P22, P32; P 13, P23, P33).

**2.** Apparatus according to claim 1, **characterised in that** each parameter set (PS1, PS2, PS3) has one or more control parameters (P71, P81, P91; P72, P82, P92; P73, P83, P93) for controlling the melting and casting operation as a function of the melting charge material.

**3.** Apparatus according to either claim 1 or claim 2, **characterised in that** the control device (4) has an input unit (14) for the input of melting charge identification for the selection of a parameter set (PS1, PS2, PS3).

**4.** Apparatus according to any one of the preceding claims, **characterised in that** the pyrometer (8) is a quotient pyrometer.

**5.** Apparatus according to any one of the preceding claims, **characterised in that** one or more sensors (9) of the pyrometer (8) can be directed by means of an optical system (11) directly onto at least one partial region of the melting crucible (2).

**6.** Apparatus according to any one of claims 1 to 4, **characterised in that** the sensor or sensors (9) of the pyrometer (8) is/are connected to the optical system (11) by way of an optical waveguide (10) which can be directed onto at least one partial region of the melting crucible (2).

**7.** Apparatus according to any one of the preceding claims, **characterised in that** the control device (4) has a communication interface for supplementing and/or updating the database (16), parameter sets (PS1, PS2, PS3), parameters and/or control programs and/or for reading out protocols of a melting and casting operation and/or parameters.

8. Apparatus according to any one of the preceding claims, **characterised in that** associated with each melting charge identification is its own parameter set (PS1, PS2, PS3).

9. Apparatus according to any one of claims 1 to 7, **characterised in that** an individual parameter set is associated with a respective group of a plurality of melting charge identifications of a melting charge family, in particular an alloy family, having substantially identical or similar melting and casting properties.

10. Apparatus according to any one of the preceding claims, **characterised in that** the heating device (3) is configured by the control device (4) in such a way that a predetermined temperature of the molten material is kept substantially constant.

11. Apparatus according to any one of the preceding claims, **characterised in that** the heating device (3) is controllable by the control device (4) in such a way that the heating power of the heating device (3) is reduced when a predetermined temperature of the molten material is reached.

12. Apparatus according to any one of the preceding claims, **characterised in that** the control device (4) is so constructed that it selects a parameter as a function of the melting charge temperature pattern ascertained during a melting operation, in particular the ascertained solidus temperature and/or the ascertained liquidus temperature.

13. Apparatus according to any one of the preceding claims, **characterised in that** the control device (4) is operable in a pyrometer calibration mode in which the control means sets calibration parameters for calibrating the pyrometer as a function of the temperature pattern ascertained with a predetermined reference melting charge, in particular the solidus-liquidus temperature characteristic.

14. Apparatus according to any one of the preceding claims, **characterised in that** the control device (4) is operable in a testing mode in which the control means checks the pyrometer (8) on the basis of the temperature pattern ascertained with a predetermined reference melting charge, in particular the solidus-liquidus temperature characteristic.

15. Apparatus according to either claim 13 or claim 14, **characterised in that** the reference melting charge is a pure metal, in particular pure copper.

16. Apparatus according to any one of the preceding claims, **characterised in that** the control device (4) controls the melting and casting operation as a function of the presence or the absence of an auxiliary means (17) which can be arranged in the region of the melting crucible, in particular a graphite insert, for assisting with the heating operation.

17. Apparatus according to claim 16, **characterised in that** the ascertained melting charge temperature is reduced by a temperature difference value $T_0$ when the auxiliary means (17) is present.

18. Apparatus according to claim 17, **characterised in that** the temperature difference value $T_0$ is ascertained from the casting temperature $T_G$ approximately in accordance with the following equation:

$$T_0 = ((T_o - T_G)/(T_o - T_u)) * T_{const.}$$

wherein $T_o$ is an upper temperature value in the range of between 1,300 and 1,600 °C, in particular 1, 400 °C, $T_u$ is a lower temperature value in the range of between 800 and 1,100 °C, in particular 1,000 °C, and $T_{const.}$ is a temperature constant in the range of between 80 and 180 °C, in particular 100 °C.

19. Apparatus according to any one of claims 16 to 18, **characterised in that** a given moment in time during the melting and casting operation is displaced by a compensating time duration $t_v$ when the auxiliary means (17) is present.

**20.** Apparatus according to claim 19, **characterised in that** the compensating time duration $t_v$ is ascertained from the casting temperature $T_G$ approximately in accordance with the following equation:

$$t_v = ((T_o - T_G)/(T_o - T_u)) * t_{const.}$$

wherein $T_o$ is an upper temperature value in the range of between 1,300 and 1,600 °C, in particular 1,400 °C, $T_u$ is a lower temperature value in the range of between 800 and 1,100 °C, in particular 1,000 °C, and $t_{const.}$ is a time constant in the range of between 10 seconds and 120 seconds, in particular 60 seconds.

**21.** Method for carrying out a melting and casting operation by precision casting, in particular in dentistry, in particular with a casting apparatus (1) according to any one of claims 1 to 20, including the following steps:

- introducing melting charge into a melting crucible (2),
- heating the melting charge by means of a heating device (3) and
- controlling the melting and casting operation as a function of the ascertained melting charge temperature,
- wherein one of a plurality of melting charge material-specific parameter sets (PS1, PS2, PS3) is selected from a database (16) as a function of the introduced melting charge and
- the temperature of the melting charge is ascertained by means of a pyrometer (8),

**characterised in that**

- the pyrometer (8) is adapted to the properties of the respective melting charge using one or more pyrometer configuration parameters (P11, P21, P31; P12, P22, P32; P13, P23, P33) of the selected parameter set (PS1, PS2, PS3).

**22.** Method according to claim 21, **characterised in that** the melting and casting operation is controlled by means of one or more material-specific parameters (P71, P81, P91; P72, P82, P92; P73, P83, P93) of the selected parameter set (PS1, PS2, PS3).

**23.** Method according to either claim 21 or claim 22, **characterised in that** a parameter set (PS1, PS2, PS3) is selected on the basis of a melting charge identification input by means of an input unit.

**24.** Method according to any one of claims 21 to 23, **characterised in that** the temperature of the molten material is kept substantially constant at a predetermined temperature for a predetermined period of time.

**25.** Method according to any one of claims 21 to 24, **characterised in that** the heating power of the heating device (3) is reduced when a predetermined temperature of the molten material is reached.

**26.** Method according to any one of claims 21 to 25, **characterised in that** a parameter set (PS1, PS2, PS3) is selected on the basis of a melting charge temperature pattern ascertained during a melting operation, in particular the ascertained solidus temperature and/or the ascertained liquidus temperature.

**27.** Method according to any one of claims 21 to 25, **characterised in that** a melting operation is implemented with a reference melting charge and a temperature pattern, in particular the solidus-liquidus temperature characteristic, is ascertained and compared to a reference characteristic, stored in the database (16), of the reference melting charge and the pyrometer (8) is calibrated and/or checked using the result of the comparison.

**Revendications**

**1.** Dispositif de mise en oeuvre d'un processus de fusion et de coulée dans la technique de coulée de précision, en particulier dans le domaine dentaire, comportant

- un creuset (2) destiné à recevoir la matière à fondre,
- un dispositif de chauffage (3) destiné à chauffer la matière à fondre contenue dans le creuset (2), et

- un dispositif de commande (4) destiné à commander le processus de fusion et de coulée en fonction de la température mesurée de la matière à fondre,
- le dispositif de commande (4) comportant une base de données (16) avec plusieurs enregistrements de paramètres (PS1, PS2, PS3) sélectionnables et respectivement spécifiques à la matière à fondre, et
- un pyromètre (8) destiné à mesurer la température de la matière à fondre,

**caractérisé en ce que**

- chaque enregistrement de paramètres (PS1, PS2, PS3) contient respectivement un ou plusieurs paramètres de configuration du pyromètre (P11, P21, P31; P12, P22, P32 ; P13, P23, P33) pour configurer le pyromètre (8) et le pyromètre (8), au moyen de ces paramètres de configuration du pyromètre (P11, P21, P31 ; P12, P22, P32 ; P13, P23, P33) est ajusté aux propriétés de chaque matière à fondre.

2. Dispositif selon la revendication 1, **caractérisé en ce que** chaque enregistrement de paramètres (PS1, PS2, PS3) contient un ou plusieurs paramètres de commande (P71, P81, P91 ; P72, P82, P92 ; P73, P83, P93) pour la commande du processus de fusion et de coulée en fonction de la matière à fondre.

3. Dispositif selon la revendication 1 ou 2, **caractérisé en ce que** le dispositif de commande (4) comporte une unité d'entrée (14) pour entrer une identification de la matière à fondre en vue de sélectionner un enregistrement de paramètres (PS1, PS2, PS3).

4. Dispositif selon l'une quelconque des revendications précédentes, **caractérisé en ce que** le pyromètre (8) est un pyromètre à quotient.

5. Dispositif selon l'une quelconque des revendications précédentes, **caractérisé en ce qu'**un ou plusieurs capteurs (9) du pyromètre (8) peuvent être orientés au moyen d'une optique (11) directement sur au moins une zone partielle du creuset (2).

6. Dispositif selon l'une quelconque des revendications 1 à 4, **caractérisé en ce que** le ou les capteurs (9) du pyromètre (8) est/sont reliés via une fibre optique (10) à l'optique (11) qui peut être orienté sur au moins une zone partielle du creuset (2).

7. Dispositif selon l'une quelconque des revendications précédentes, **caractérisé en ce que** le dispositif de commande (4) comporte une interface de communication pour compléter et/ou mettre à jour la base de données (16), les enregistrements de paramètres (PS1, PS2, PS3), les paramètres et/ou des programmes de commande et/ou pour charger des protocoles d'un procédé de fusion et de coulée et/ou des paramètres.

8. Dispositif selon l'une quelconque des revendications précédentes, **caractérisé en ce qu'**à chaque identification de matière en fusion est associé son propre enregistrement de paramètres (PS1, PS2, PS3).

9. Dispositif selon l'une quelconque des revendications 1 à 7, **caractérisé en ce qu'**un enregistrement de paramètres individuel est associé à respectivement un groupe de plusieurs identifications de matière à fondre d'une famille de matières, en particulier d'une famille d'alliages, ayant sensiblement des propriétés de fusion et de coulée identiques ou similaires.

10. Dispositif selon l'une quelconque des revendications précédentes, **caractérisé en ce que** le dispositif de chauffage (3) est réalisé par le dispositif de commande (4), de telle sorte que qu'une température prédéfinie de la matière en fusion est maintenue sensiblement constante.

11. Dispositif selon l'une quelconque des revendications précédentes, **caractérisé en ce que** le dispositif de chauffage (3) peut être commandé par le dispositif de commande (4) de manière à diminuer la puissance de chauffage du dispositif de chauffage (3) lorsque la matière en fusion a atteint une température prédéfinie.

12. Dispositif selon l'une quelconque des revendications précédentes, **caractérisé en ce que** le dispositif de commande (4) est réalisé de telle sorte qu'il sélectionne un paramètre en fonction de l'évolution de la température de la matière à fondre mesurée pendant un processus de coulée, en particulier la température du solidus mesurée et/ou la température du liquidus mesurée.

13. Dispositif selon l'une quelconque des revendications précédentes, **caractérisé en ce que** le dispositif de commande (4) peut être utilisé dans un mode d'étalonnage du pyromètre, dans lequel la commande règle des paramètres pour l'étalonnage du pyromètre en fonction de l'évolution de la température mesurée avec une matière de référence prédéterminée, en particulier la courbe caractéristique de la température du solidus et liquidus.

14. Dispositif selon l'une quelconque des revendications précédentes, **caractérisé en ce que** le dispositif de commande (4) peut être utilisé dans un mode de test, dans lequel la commande teste le pyromètre (8) à l'appui de l'évolution de la température mesurée avec une matière de référence, en particulier la courbe caractéristique de la température du solidus et liquidus.

15. Dispositif selon la revendication 13 ou 14, **caractérisé en ce que** la matière de référence est un métal pur, en particulier du cuivre pur.

16. Dispositif selon l'une quelconque des revendications précédentes, **caractérisé en ce que** le dispositif de commande (4) commande le processus de fusion et de coulée en fonction de la présence ou de l'absence d'un moyen auxiliaire (17), en particulier un insert de graphite, qui peut être agencé dans la zone du creuset (2) en vue de favoriser le processus de chauffage.

17. Dispositif selon la revendication 16, **caractérisé en ce que** la température de la matière à fondre, mesurée en présence du moyen auxiliaire (17), est diminuée d'une valeur de différence de température $T_{\ddot{u}}$.

18. Dispositif selon la revendication 17, **caractérisé en ce que** la valeur de différence de température $T_{\ddot{u}}$ est déterminée à partir de la température de coulée $T_G$ approximativement selon l'équation suivante:

$$T_{\ddot{U}} \; = \; ((T_o \; - \; T_G)/(T_o \; - \; T_u)) \; * \; T_{const,}$$

dans laquelle $T_o$ est une valeur de haute température dans la plage de 1 300°C à 1 600°C, en particulier 1 400°C, $T_u$ est une valeur de basse température dans la plage de 800°C à 1 100°C, en particulier de 1 000°C, et $T_{const}$ est une constante de température dans la plage de 50°C à 250°C, en particulier de 80°C à 180°C, en particulier 100°C.

19. Dispositif selon l'une quelconque des revendications 16 à 18, **caractérisé en ce que**, pendant le processus de fusion et de coulée en présence d'un moyen auxiliaire (17), un moment déterminé est décalé selon une durée d'équilibrage $t_v$.

20. Dispositif selon la revendication 19, **caractérisé en ce que** la durée d'équilibrage $t_v$ est déterminée à partir de la température de coulée $T_G$ approximativement selon l'équation suivante:

$$t_v \; = \; ((T_o \; - \; T_G)/(T_o \; - \; T_u)) \; * \; t_{const,}$$

dans laquelle $T_o$ est une valeur de haute température dans la plage de 1 300°C à 1 600°C, en particulier 1 400°C, $T_u$ est une valeur de basse température dans la plage de 800°C à 1 100°C, en particulier de 1 000°C, et $t_{const}$ est une constante de temps dans la plage de 10 secondes à 120 secondes, en particulier 60 secondes.

21. Procédé de mise en oeuvre d'un processus de fusion et de coulée dans la technique de coulée de précision, en particulier dans le domaine dentaire, en particulier avec un dispositif de coulée (1) selon une des revendications 1 à 20, comportant les étapes suivantes :

   - introduction de la matière à fondre dans un creuset (2),
   - chauffage de la matière à fondre au moyen d'un dispositif de chauffage (3) et
   - commande du processus de fusion et de coulée en fonction d'une température mesurée de la matière à fondre,
   - un enregistrement de paramètres (PS1, PS2, PS3), parmi les enregistrements de paramètres spécifiques à la matière à fondre, étant sélectionné dans une base de données (16) en fonction de la matière à fondre introduite, et
   - la température de la matière à fondre étant mesurée au moyen d'un pyromètre (8),

**caractérisé en ce que**

- le pyromètre (8) est ajusté aux propriétés de chaque matière à fondre au moyen d'un ou de plusieurs paramètres de configuration du pyromètre (P11, P21, P31 ; P12, P22, P32 ; P13, P23, P33) dans l'enregistrement de paramètres (PS1, PS2, PS3) sélectionné.

22. Procédé selon la revendication 21, **caractérisé en ce que** le processus de fusion et de coulée est commandé au moyen d'un ou plusieurs paramètres de commande (P71, P81, P91; P72, P82, P92 ; P73, P83, P93) dans l'enregistrement de paramètres (PS1, PS2, PS3) sélectionné.

23. Procédé selon la revendication 21 ou 22, **caractérisé en ce que** l'enregistrement de paramètres (PS1, PS2, PS3) est sélectionné à l'appui d'une identification de la matière à fondre entrée au moyen d'un dispositif d'entrée.

24. Procédé selon l'une quelconque des revendications 21 à 23, **caractérisé en ce que** la température de la matière en fusion est maintenue sensiblement constante à une température prédéterminée pendant une durée prédéterminée.

25. Procédé selon l'une quelconque des revendications 21 à 24, **caractérisé en ce que** la puissance de chauffage du dispositif de chauffage (3) est diminuée lorsque la matière en fusion atteint une température prédéterminée.

26. Procédé selon l'une quelconque des revendications 21 à 25, **caractérisé en ce qu'**un enregistrement de paramètres (PS1, PS2, PS3) est sélectionné à l'appui d'une évolution de la température de la matière, déterminée pendant un processus de fusion, en particulier la température du solidus mesurée et/ou la température du liquidus mesurée.

27. Procédé selon l'une quelconque des revendications 21 à 25, **caractérisé en ce qu'**un processus de fusion est mis en oeuvre avec une matière de référence et une évolution de la température, en particulier la courbe caractéristique de la température du solidus et liquidus, est déterminée et est comparée à une courbe de référence de la matière de référence, enregistrée dans la base de données (16), et le pyromètre (8) est étalonné et/ou testé à l'appui du résultat de la comparaison.

*Fig. 1*

Datenbank

16

Schmelzgutidentifikation

4

| | Material 1 | Material 2 | Material 3 | ... |
|---|---|---|---|---|
| | PS1 | PS2 | PS1 | .. |
| | P11 | P12 | P13 | .. |
| | P21 | P22 | P23 | .. |
| | P31 | P32 | P33 | .. |
| | .. | .. | .. | .. |
| | .. | .. | .. | .. |
| | P71 | P72 | P73 | .. |
| | P81 | P82 | P83 | .. |
| | P91 | P92 | P93 | .. |
| | .. | .. | .. | .. |
| | .. | .. | .. | .. |

Konfigurationsparameter
für Pyrometer

Steuerungsparameter
für Schmelz- und Gießvorgang.

Referenzmaterial 1          Referenzmaterial 2     ....

Referenzkennlinien

EP 1 440 750 B1

_Fig. 2_